# EUROPÄISCHE PATENTSCHRIFT

(11) **EP 0 944 231 B1**
(45) Veröffentlichungstag und Bekanntmachung des Hinweises auf die Patenterteilung: **07.03.2007**
(21) Anmeldenummer: 99103539.5
(22) Anmeldetag: 24.02.1999
(51) Int. Cl.: H04M 3/42, H04M 17/00

(54) **Verfahren zur Bereitstellung von telekommunikationsgestützten Dienstleistungen**
Method for the provision of telecommunications services
Procédé pour fournir des services de télécommunications

(30) Priorität: 18.03.1998 DE 19812897
(43) Veröffentlichungstag der Anmeldung: 22.09.1999
(73) Patentinhaber: Deutsche Telekom AG, 53113 Bonn (DE)
(72) Erfinder: Müller, Christel, 15732 Schulzendorf (DE); Trinkel, Marian, 52393 Hürtgenwald (DE); Ziem, Thomas, 16341 Zepernick (DE); Runge, Fred, 15838 Wünsdorf (DE); Wetzel, Romeo Peter, 70197 Stuttgart (DE)

(56) Entgegenhaltungen:
- EP-A- 0 451 693
- WO-A-97/20422
- WO-A-97/50223
- GB-A- 2 308 039
- US-A- 4 759 056
- US-A- 4 899 373
- US-A- 5 181 238
- US-A- 5 621 787

## Beschreibung

Das erfindungsgemäße Verfahren ist auf die Bereitstellung von telekommunikationsgestützten Dienstleistungen über Calling-Card-Systeme entsprechend den Dienstleistungswünschen des Kunden ausgerichtet.

Calling-Card-Systeme benötigen wie in Telekom Praxis 12/97 Seite 17 bis 27 unter dem Titel "Calling Card Services-Merkmale und technische Realisierung" beschrieben, im Gegensatz zu üblichen Telefonkarten und zu Kreditkartenlösungen eigentlich keine Plastikkarten um zu funktionieren. Dieses System arbeitet auf der Basis von Ziffernfolgen die aus einer Kartennummer und einer Geheimzahl bestehen, und die z. B. aus dem Gedächtnis von jedem beliebigen Tastentelefon aus eingetippt werden können. Anhand der Ziffernfolge identifiziert sich der Telefonkunde in der Datenbank des Systemcomputers als berechtigter Nutzer des Systems. Calling Card Services machen es erstmals möglich von jedem beliebigen Telefon an jedem beliebigen Ort der Welt auf eigene Rechnung bargeldlos wie vom eigenen Apparat aus zu telefonieren.

Die grundsätzlichen Dienste-Funktionen eines Calling-Card Systems können wie folgt klassifiziert werden:
a) weltweites bargeldloses Telefonieren mit persönlichem Benutzercode (PAN und PIN) und individueller Entgeltzuordnung auf ein eigenes Kundenkartenkonto;
b) weltweites bargeldloses Telefonieren mit Hilfe eines vorher im System gespeicherten Geldbetrages (Kredit-Telefonieren);
c) weltweites bargeldloses Telefonieren mit Haupt- und Nebenkarten und Zuordnung der Kosten zu festgelegten Kostenstellen (Kostenstellen-Telefonieren);
d) weltweites bargeldloses Telefonieren für Jugendliche mit Call-Home-Funktion (Familien-CCS).
e) Bereitstellen von Servicefunktionalitäten, wie etwa Sprachbox-Funktion.

Bei Verfahren, die auf den beschriebenen Wirkprinzipien beruhen, werden die einzelnen Dienstleistungen als voneinander unabhängige Dienstleistungen betrachtet, die dem Kunden auch nur als einzelne Dienstleistungen angeboten werden können.

Dabei wird die Endgerätekonfiguration des Kunden nicht berücksichtigt. Die Interaktion zwischen Kunden und Calling-Card-System beschränkt sich bei sprachgesteuerten Systemen auf wenige einzelne Steuerworte in einer Sprache. Konvertierungen, beispielsweise von Sprache nach Schrift (Ausgabe per Fax), sind bisher nicht möglich. Alle existierenden Dienste sind auf in sich geschlossenen Plattformen realisiert, die keine Erweiterungsmöglichkeiten, in Form von neuen Diensten und neuen Konvertierungsformen zulassen.

Aus USA-A-5 621 787 ist eine Lösung bekannt, bei der ein System bereitgestellt wird, in dem eine Guthabenkarte mit einer ID- Nummer zum Führen von Ferngesprächen oder Bestellen von Diensten über ein Festnetz- Telefonsystem verwendet wird.

Beim Kauf der Guthabenkarte für Ferngespräche kann der Kartenverkäufer die zu nutzenden Fernverbindungsbetreiber wählen. Dieses System ermöglicht auch dem Kartenkäufer die Wahl seiner Fernverbindungsbetreiber. Alternativ kann die Karten- ID- Nummer wie eine Kreditkarte verwendet werden, wenn das System die erforderlichen Transaktionen zum Prüfen der Kreditwürdigkeit des Nutzers ausführen kann.

Die technische Aufgabe ist auf ein Verfahren für ein Calling-Card-System ausgerichtet, welches dem Kunden einen breitgefächerten erweiterbaren Zugang zu telekommunikationsgestützten Diensten, insbesondere auch bei komplexen Dienstleistungswünschen, ermöglicht. Ausgehend von seinen Dienstleistungswünschen sollen dem Kunden vom Calling-Card-System nacheinander alle Dienstekomponenten angeboten werden, die er zur Lösung seines Dienstleistungswunsches benötigt.

Desweiteren soll vor Bereitstellung der gewünschten Dienste eine Berechtigungskontrolle des Kunden, sowie eine Plausibilitätskontrolle erfolgen.

Gelöst wird diese Aufgabe durch ein Verfahren mit den Merkmalen nach Anspruch 1. Erfindungsgemäß wird nach Anruf des Kunden und Herstellung der Verbindung des Telekommunikationsendgerätes des Kunden zu einem Calling-Card-Service nach Erkennung einer ersten gültigen Informationseingabe des Kunden über eine Steuerbaugruppe eine Verbindung zu einer Datenbank hergestellt, in der Daten über die im Rahmen des Diensteangebots des Calling-Card-Services zugelassenen Typen von Calling-Cards mit den Kennungen zu den Calling-Cards und den für den jeweiligen Kartentyp zulässigen Dienstleistungen gespeichert und logisch miteinander verknüpft sind. Über das Informationseingabe/Ausgabe Modul des Calling-Card-Services wird der Kunde zur Eingabe von Daten wie PAN und PIN aufgefordert, die zu seiner Identifikation im Zusammenhang mit der von ihm verwendeten Calling-Card notwendig sind. Nach erfolgreicher Identifikation des Kunden gegenüber dem Calling-Card-Service wird der Kunde über das Informationseingabe/Ausgabe Modul aufgefordert, eine Information über die von ihm gewünschte Dienstleistung bzw. die gewünschten Dienstleistungen einzugeben.

In einer zweiten nachgeordneten Datenbank wird anhand der PAN geprüft, ob die vom Kunden gewünschte Dienstleistung im Zusammenhang mit der von ihm benutzten Calling-Card zulässig ist. Bei Zulässigkeit der vom Kunden gewünschten Dienstleistung werden zur Erfüllung des Dienstleistungswunsches geeigneten Dienste bzw. Dienstekombinationen sowie die dazugehörigen Informationseingabe- und Ausgabemedien über eine Datenbank ermittelt, in der Daten über Dienstleistungen bzw. Kombinationen von Dienstleistungen gespeichert sind, welche logisch mit gespeicherten Daten über Informationseingabe- und Ausgabemedien und daraus ableitbaren Kombinationen von Informationseingabe- und Ausgabemedien verknüpft sind. Unter Informationseingabe- und Ausgabemedien werde dabei Sprache, Daten Video und Audio verstanden, denen arttypische Endgeräte zugeordnet sind, die diese Informationseingabe- und Ausgabemedien unterstützen.

Die aufgrund des Dienstleistungswunsches des Kunden ermittelten Dienste bzw. Dienstekombinationen und die dazu ermittelten Informationseingabe- und Ausgabemedien werden einer Plausibilitätsprüfung unterzogen, wobei mittels einer Auswertelogik geprüft wird, ob der gewünschte Dienst bzw. die gewünschte Dienstekombination durch das beim Kunden vorhandene Informationseingabe/Ausgabe Modul und die Calling-Card des Kunden unterstützt wird, ob der gewünschte Dienst bzw. die gewünschte Dienstekombination für die Lösung des Problems des Kunden geeignet ist und ob der gewünschte Dienst bzw. die gewünschte Dienstekombination im Rahmen des Calling-Card-Services zugelassen ist.

Bei negativem Ergebnis der Plausibilitätsprüfung erfolgt eine Rückmeldung zum Informationseingabe/Ausgabe Modul, von dem eine zu dem aufgetretenen Problem gespeicherte Information an den Kunden ausgegeben wird. Über diese Information wird der Kunde zur Korrektur der Angaben zu seinem Dienstleistungswunsch aufgefordert.

Bei erfolgreichem Abschluß der Plausibilitätsprüfung wird der für die Lösung des Problems des Kunden erforderliche Dienst- bzw. die erforderliche Dienstekombination generiert und automatisch zum Kunden durchgeschaltet. Der Kunde ist über den ihm zur Verfügung gestellten Dienst bzw. die ihm zur Verfügung gestellte Dienstekombination in Verbindung mit der ihm zur Verfügung stehenden Endgerätekonfiguration in der Lage, seinen Dienstleistungswunsch zu realisieren.

Das erfindungsgemäße Verfahren wird anhand eines Ausführungsbeispiels für einen Calling-Card-Service näher erläutert, welcher auf einer sprachgesteuerten Dialogführung Mensch/Maschine basiert. Der Kunde, der über eine Inhabertelefonkarte verfügt, wünscht die Ermittlung einer Telefonnummer und die Herstellung einer Kommunikationsverbindung zu dieser Telefonnummer. Eine Inhabertelefonkarte ist eine personengebundene Karte, bei der der Kunde seine persönlichen Daten mit gültiger Kontonummer zur Generierung eines Stammdatensatzes an das System übergibt. Der Kunde erhält eine PAN als Kundenadresse und eine PIN, die ihn gegenüber dem Calling-Card-System identifiziert.

Nach Anwahl der Servicerufnummer eines Calling-Card-Providers wird der Kunde nach Herstellung der Verbindung zur Servicezentrale des Calling-Card-Providers über eine Baugruppe Telefoninterface mit CLI- Erkennung (Calling-Line-Identifikation) mit einem Informationseingabe/Ausgabe Modul verbunden, welches als Spracherkennungs /Sprachausgabe Modul ausgebildet ist und welches nach dem Prinzip der nutzerunabhängigen Spracherkennung arbeitet.

Nach Feststellung der Anschlußkennung (CLI-Erkennung), durch die das Telekommunikationsendgerät, von dem der Kunde anruft, definiert ist, wird nach Erkennung einer ersten gültigen Spracheingabe des Kunden eine erste Datenbank aktiviert, in der die Daten der verschiedenen Typen von Calling-Cards mit den für den jeweiligen Kartentyp zulässigen Datendiensten bzw. Kombinationen von Datendiensten, sowie den Kennungen wie PAN und PIN zu den Calling-Cards gespeichert und logisch miteinander verknüpft sind. Eine PIN ist dabei nur bei personengebundenen Calling-Cards erforderlich.

Über das Spracherkennungs /Sprachausgabe Modul wird der Kunde zur Angabe der zur Erkennung seiner speziellen Calling-Card und zur Erkennung seiner Zugangsberechtigung notwendigen Daten, wie PAN und PIN oder nur PAN aufgefordert. Die Kartennummer PAN stellt die Kundenadresse im System dar. Sie ist gleichzeitig die Identifikation des Kunden gegenüber dem Calling-Card-System und berechtigt zur Einwahl in den Calling-Card-Service. Mit der PIN weist der Kunde vor jeder Nutzung nach, daß nur er berechtigt ist, die gewünschte Dienstleistung in Anspruch zu nehmen. Nach erfolgreicher Prüfung der Daten der Calling-Card und damit der Berechtigung des Kunden, wird der Kunde nach den ihm außer dem Telefon zur Verfügung stehenden Kommunikationsendgeräten, wie beispielsweise Fax, e-mail, usw. und nach seinem Dienstleistungswunsch abgefragt. Der Kunde gibt über das Spracherkennungs /Sprachausgabe Modul ein, daß er eine bestimmten Telefonnummer sucht und mit dieser Telefonnummer verbunden werden möchte. Anhand der bereits dem System bekannten PAN der Calling Card wird geprüft, ob der Dienstleistungswunsch des Kunden zulässig ist.

Nach erfolgreicher Prüfung wird eine zweite Datenbank aktiviert. Die zweite Datenbank dient als Datenbank für eine Suchroutine. Sie enthält eine Verknüpfungsmatrix, in der alle möglichen Datendienste/Dienstleistungen, wie Auftragsdienste, Telefondienste, Auskunftsdienste und Übersetzungsdienste logisch miteinander und mit einer Konvertierungsmatrix verknüpft sind, die mögliche Ein- und Ausgabemedien oder Kombinationen von Ein- und Ausgabemedien für die o.g. Datendienste enthält. Über eine Suchroutine werden, ausgehend vom Dienstleistungswunsch des Kunden, die Datendienste/Dienstleistungen und die Ein- und Ausgabemedien ermittelt, die für die Erfüllung des Dienstleistungswunsches des Kunden geeignet sind. Die Konvertierungsmatrix für die Ein- und Ausgabemedien ist dabei so aufgebaut, daß sie alle bekannten Ein- und Ausgabemedien enthält, und daß aus ihr alle im Rahmen der Datendienste und der Kombination von Datendiensten möglichen Kombinationen von Informationseingabe und Ausgabemedien mit den sie unterstützenden Endgerätekonfigurationen konvertiert werden können. Das heißt, es sind auch Kombinationen enthalten, die bisher noch nicht technisch umgesetzt werden können.

Mit dieser Matrix steht demnach ein Mittel zur Verfügung, in dem bereits zukünftige Kombinationsmöglichkeiten von Dienstleistungen und für diese Dienstleistungen geeignete Informationseingabe- und Ausgabemedien berücksichtigt sind.

Für den aktuellen Betrieb ist eine Begrenzung der Kombinationsmöglichkeiten auf zulässige Kombinationsmöglichkeiten entsprechend dem aktuellen Dienstleistungsangebot des Calling-Card-Systems zweckmäßig.

Zulässige Kombinationsmöglichkeiten lassen sich nach folgenden Suchkriterien ermitteln:
- Welche Kombinationsmöglichkeiten sind im Rahmen der zulässigen Calling-Cards möglich,
- welche Kombinationen werden von den Kunden gewünscht bzw. sind für die Kunden sinnvoll und
- welche Kombinationsmöglichkeiten werden hardwaremäßg unterstützt.

Über die Daten der nach diesem Prinzip aufgebauten Datenbank wird, ausgehend vom Wunsch bzw. von der Problemstellung des Kunden, der zur Lösung benötigte Dienst bzw. die zur Lösung benötigte Dienstekombination in Verbindung mit den möglichen Informationsein- und Ausgabemedien ermittelt und einer Plausibilitätsprüfung unterzogen. Dabei wird geprüft, ob der gewünschte Dienst in Verbindung mit den ermittelten Ein- und Ausgabemedien für die Lösung des Problems des Kunden unter Berücksichtigung der beim Kunden verfügbaren Endgerätekonfiguration geeignet ist.

Eine derartige Plausibilitätsprüfung ist insbesondere dann von Vorteil, wenn zur Lösung des Problems mehrere Dienste zu einer Dienstekombination miteinander verknüpft werden müssen. Bei der Kombination von mehreren Diensten wird die ausgewählte Kombination einer weiteren Plausibilitätsprüfung unterworfen, bei der anhand eines Vergleichs mit gespeicherten erlaubten Diensten und Dienstekombinationen und den dazu erlaubten Ein- und Ausgabemedien geprüft wird, ob die gewählte Kombination zulässig ist.

Wird eine ungültige Problemstellung bzw. eine ungültige Kombination von Datendiensten erkannt, so erfolgt eine Rückmeldung zum Spracherkennungs/ Sprachausgabe Modul. Über das Spracherkennungs /Sprachausgabe Modul erfolgt die Sprachausgabe einer zu dem aufgetretenen Problem gespeicherten Fehlermeldung an den Kunden. Der Kunde wird darin zur Korrektur der Angaben zu seiner Problemstellung aufgefordert.

Bei einer erfolgreichen Plausibilitätsprüfung wird der für die Lösung des Problems des Kunden erforderliche Dienst bzw. die erforderliche Dienstekombination, die anhand des Vergleichs mit den für die Problemstellung gespeicherten Daten ermittelt wurde, generiert und automatisch zum Kunden durchgeschaltet. Der Dienst bzw. die Dienste-Kombination, die der Kunde zur Lösung seines Dienstleistungswunsches benötigt, steht dem Kunden abfragebereit zur Verfügung. Da der Kunde, wie oben als Beispiel ausgeführt, eine bestimmte Telefonnummer sucht, wird er automatisch mit einem Auskunftsdienst, beispielsweise einer Telefonauskunft, verbunden. Nachdem der Kunde die Telefonnummer über die Telefonauskunft ermittelt hat, wird er von der Zentrale des Calling-Card-Providers wieder übernommen und mit dem entsprechenden Telefonanschluß verbunden. Das ist dadurch möglich, daß die Rückgabe der gewünschte Telefonnummer in Form einer Dreierkonferenz zwischen Telefonauskunft, Kunden und Calling-Card-Service erfolgt. Im System des Calling-Card-Services wird die als Sprachinformation von der Telefonauskunft ausgegebene Telefonnummer empfangen, per Spracherkennung ausgewertet, in eine Ziffernfolge umgewandelt und automatisch in die Datenbank des Vermittlungsdienstes als gewünschte B-Rufnummer für den Kunden eingetragen. Anschließend erfolgt automatisch die Verbindungsanwahl des gewünschten B-Teilnehmers und die Ansage des Zustandes des B-Teilnehmers beim Kunden bzw. die Herstellung der Verbindung zwischen dem Kunden und dem gewünschten B-Teilnehmer.

Nach Nutzung des gewünschten Dienstes bzw. der gewünschten Dienste-Kombination erfolgt die Abbuchung der für die Inanspruchnahme der Dienstleistung angefallenen Gebühr, über das Guthaben der vom Kunden verwendete Calling-Card, beispielsweise das Guthaben einer Inhaberkarte. Das erfindungsgemäße Verfahren ist so konzipiert, daß bei Bedienschwierigkeiten im Dialog mit der Maschine die Umschaltung zu einem Operator vorgesehen ist. Dazu sind an verschiedenen Stellen im Dialog Kunde/Maschine automatische Umschaltungsmöglichkeiten vorgesehen. Umschaltungen werden dann aktiviert, wenn der Computer die nachgefragten Daten nicht, nicht rechtzeitig oder in falscher Form erhält. Parallel zur Verbindung mit dem Kunden werden dem Operator auf seinem Bildschirm alle für die Kommunikation mit dem Kunden wichtigen Daten, wie z. B. Kartennummer, Zielrufnummer usw. angezeigt.

Der Vorteil des erfindungsgemäßen Verfahrens besteht darin, daß dem Kunden aus einer Vielzahl von möglichen Diensten bzw. Kombinationen von Diensten über eine Suchroutine der Dienst bzw. die Dienstekombination zur Verfügung gestellt wird, die er für die Lösung seines Problems bzw. seines Dienstleistungswunsches benötigt. Dabei wird geprüft, ob der Kunde auf die für diesen Dienst bzw. diese Dienstekombination benötigte Endgerätekonfiguration Zugriff hat bzw. daß die Endgerätekonfiguration des Kunden diesen Dienst bzw. diese Dienstekombination unterstützt. Für den Zugang des Kunden zum Calling-Card-Service, sind erfindungsgemäß die unterschiedlichsten Kartentypen, wie beispielsweise Inhaberkarte, Guthabenkarte, Call-Home-Karte usw. zugelassen. Durch den Typ der Calling-Card wird dabei insbesondere die Zugriffsberechtigung des Kunden zu den verschiedenen möglichen Diensten bzw. Dienstekombinationen, sowie die Art der Leistungsabrechnung definiert.

Die erfindungsgemäße Lösung ist geeignet, den Automationsgrad der durch Calling-Card-Provider angebotenen Dienste zu erhöhen. Der Kunde hat den Vorteil, daß er insbesondere in dem Fall eines komplexen, einzelne Dienste übergreifenden Dienstleistungswunsches, in einer Session alle zur Erfüllung seines Dienstleistungswunsches notwendigen Dienste bzw. Dienstekombinationen nacheinander zur Verfügung gestellt bekommt.

## Patentansprüche

1. Verfahren zur Bereitstellung von telekommunikationsgestützten Dienstleistungen, bei dem der Zugang zum Dienstleistungsanbieter kartengestützt über einen Calling-Card- Provider erfolgt, wobei die Dialogführung zwischen Kommunikationsendgerät des Kunden und den Calling-Card-Services des Calling-Card-Providers über Informationseingabe/Ausgabe Module erfolgt, wobei der Kunde nach Anwahl der Rufnummer/Servicenummer des Calling-Card -Services über eine Baugruppe Telefoninterface mit Anschlußkennung mit den Informationseingabe/Ausgabe Modulen verbunden wird, und daß über die Baugruppe Informationseingabe /Ausgabe Module die Interaktion mit dem Kunden gestartet wird,
**dadurch gekennzeichnet,**
- **daß** nach Erkennung einer ersten gültigen Informationseingabe des Kunden über eine Steuerbaugruppe eine Verbindung zu einer Datenbank hergestellt wird, in der Daten über die im Rahmen des Diensteangebots des Calling-Card-Services zugelassenen Typen von Calling-Cards mit den Kennungen zu den Calling-Cards und den für den jeweiligen Kartentyp zulässigen Dienstleistungen, gespeichert und logisch miteinander verknüpft sind,
- **daß** der Kunde über das Informationseingabe/Ausgabe Modul zur Eingabe von Daten aufgefordert wird, die entsprechend der verwendeten Calling-Card zur Identifikation gegenüber dem Calling-Card-Service notwendig sind,
- **daß** der Kunde nach erfolgreicher Identifikation über das Informationseingabe/Ausgabe Modul nach seinem Dienstleistungswunsch und weiteren zur Verfügung stehenden Kommunikationsendgeräten abgefragt wird.
- **daß** anhand der PAN der Calling-Card des Kunden geprüft wird, ob die vom Kunden gewünschte Dienstleistung im Zusammenhang mit der von ihm benutzten Calling-Card zulässig ist,
- **daß** bei Zulässigkeit der vom Kunden gewünschten Dienstleistung zur Erfüllung des Dienstleistungswunsches über eine zweite Datenbank geeignete Dienste bzw. Dienstekombinationen in Verbindung mit geeigneten Informationseingabe- und Ausgabemedien ermittelt werden, wobei die zweite Datenbank Daten über Dienste bzw. Kombinationen von Diensten enthält, welche logisch mit einer Konvertierungsmatrix verknüft sind, in der bekannte Informationseingabe- und Ausgabemedien und alle aus den bekannten Informationseingabe- und Ausgabemedien ableitbaren Kombinationen von Ein- und Ausgangsmedien einschließlich Endgerätekonfigurationen zu den Diensten bzw. Dienstekombinationen enthalten sind,
- **daß** die aufgrund des Dienstleistungswunsches des Kunden ermittelten Dienste bzw. Dienstekombinationen in Verbindung mit den dazu ermittelten Informationseingabe- und Ausgabemedien einer Plausibilitätsprüfung unterzogen werden, wobei geprüft wird, ob der gewünschte Dienst bzw. die gewünschte Dienstekombination in Verbindung mit den ermittelten Ein- und Ausgabemedien für die Erfüllung des Dienstleistungswunsches des Kunden unter Berücksichtigung der beim Kunden verfügbaren Endgerätekonfiguration geeignet ist, und ob der gewünschte Dienst bzw. die gewünschte Dienstekombination im Rahmen des Calling-Card-Systems zugelassen ist, daß
- a) bei negativem Ausgang der Plausibilitätsprüfung eine Rückmeldung zum Informationseingabe/Ausgabe Modul erfolgt, von der eine zu dem aufgetretenen Problem gespeicherte Information an den Kunden ausgegeben wird, und daß der Kunde zur Korrektur der Angaben zu seinem Dienstleistungswunsch aufgefordert wird, und daß
- b) bei erfolgreicher Plausibilitätsprüfung der für die Erfüllung des Dienstleistungswunsches erforderliche Dienst bzw. die erforderliche Dienstekombination, generiert und automatisch zum Kunden durchgeschaltet wird, wobei, ausgehend vom Dienstleistungswunsch, vom Calling-Card-System nacheinander alle Dienstekomponenten angeboten werden, die zur Lösung des Dienstleistungswunsches benötigt werden.

2. Verfahren nach Anspruch 1, **dadurch gekennzeichnet, daß** der Dialog des Kunden mit dem Calling-Card-System als Dialog Mensch/Maschine über ein Informationseingabe/Ausgabe Modul geführt wird, welches als Spracherkennungs/Sprachausgabemodul ausgebildet ist.

3. Verfahren nach Anspruch 1, **dadurch gekennzeichnet, daß** der Dialog des Kunden mit dem Calling-Card-System mittels Austausch von alphanumerischen Steuerzeichen erfolgt.

4. Verfahren nach Anspruch 1 bis 3, **dadurch gekennzeichnet, daß** der Kunde bei auftretenden Problemen während des Dialogs Mensch/Maschine automatisch mit einem Operator verbunden wird, welchem gleichzeitig alle relevanten Daten des Kunden auf seinem Monitor angezeigt werden.

5. Verfahren nach Anspruch 1, **dadurch gekennzeichnet, daß** nach Ermittlung der für die gewünschte Dienstleistung geeigneten Dienste bzw. Dienstekombination der Kunde über das Informationseingabe/Ausgabe Modul zur Eingabe der ihm zur Verfügung stehenden Ausgabemöglichkeiten aufgefordert wird.

## Claims

1. Method for providing telecommunications-supported services in which access to the service provider takes place in a card-supported manner via a calling card provider, wherein the dialog between the customer's communications terminal device and the calling card provider's calling card service is conducted via information input/output modules, wherein the customer is connected to the information input/output modules through a telephone interface assembly with call line identification after dialing the subscriber number/service number of the calling card service, and in that the interaction with the customer is initiated via the information input/output modules assembly,
**characterized in that**
- upon detection of a first valid information input from the customer through a control assembly, a connection is established to a database in which data concerning the permitted types of calling card within the scope of the calling card service's service offering is stored with and logically connected to identifications of the calling cards and the services permitted for the respective card type,
- **in that** the customer is prompted through the information input/output module to enter data required for identification to the calling card service in accordance with the calling card used,
- **in that** following successful identification through the input/output module, the customer is queried concerning his requested service and other available communications terminal devices,
- **in that** based on the PAN of the customer's calling card, a check is performed to determine whether the service requested by the customer is permitted in connection with the calling card he has used,
- **in that** in the event that the service requested by the customer is permitted, in order to fulfill the requested service, suitable services and service combinations are identified in conjunction with suitable information input and output media by means of a second database, wherein the second database contains data on services and combinations of services, which data are logically combined with a conversion matrix that contains known information input and output media and all combinations of information input and output media that can be derived from the known information input and output media, including terminal device configurations for the services and service combinations,
- **in that** the services and service combinations identified on the basis of the customer's service request are subjected to a plausibility test in conjunction with the information input and output media identified therefore, wherein it is determined whether the desired service or desired service combination, in conjunction with the identified input and output media, is suitable for fulfilling the customer's service request, taking into account the terminal device configuration available to the customer, and whether the desired service or desired service combination is permitted within the scope of the calling card system, **in that**
- a) in the event of a negative outcome of the plausibility test, a response takes place to the information input/output module, whence stored information concerning the problem encountered is output to the user, and **in that** the customer is prompted to correct the information concerning his service request, and **in that**
- b) in the event of a successful plausibility test, the service or service combination necessary to fulfill the customer's service request is generated and automatically switched to the customer, wherein, on the basis of the service request, all service components that are required to fulfill the service request are sequentially offered by the calling card system.

2. Method according to claim 1, **characterized in that** the customer's dialog with the calling card system is conducted as a man/machine dialog through the information input/output module, which is designed as a speech recognition/speech output module.

3. Method according to claim 1, **characterized in that** the customer's dialog with the calling card system is conducted by the exchange of alphanumeric control characters.

4. Method according to any one of claims 1 through 3, **characterized in that** in the event that problems arise during the man/machine dialog, the customer is automatically connected to an operator to whom all relevant data of the customer are simultaneously displayed on the operator's monitor.

5. Method according to claim 1, **characterized in that** after determination of the services and service combinations suitable for the requested service, the customer is prompted through the information input/output module to enter the output options available to him.

## Revendications

1. Procédé de mise à disposition de services assistés par la télécommunication, dans lequel l'accès au fournisseur de service se fait à l'aide d'une carte par l'intermédiaire d'un fournisseur de cartes d'appel, le dialogue entre le terminal de communication du client et les services de cartes d'appel du fournisseur de cartes d'appel se faisant par l'intermédiaire de modules d'entrée/sortie d'informations, le client étant relié aux modules d'entrée/sortie d'informations après appel du numéro d'appel/numéro de service du service de cartes d'appel par l'intermédiaire d'un groupe d'éléments composé d'une interface téléphonique avec identification de connexion et l'interaction avec le client commençant par l'intermédiaire du groupe d'éléments composé de modules d'entrée/sortie d'informations,
**caractérisé en ce que**
- une communication est établie avec une banque de données après la reconnaissance des premières informations entrées valides du client par l'intermédiaire d'un groupe d'éléments de commande, dans laquelle les données sont mémorisées par l'intermédiaire des types de cartes d'appel autorisés dans le cadre de l'offre de service du service de cartes d'appel à l'aide des identifications des cartes d'appel et des services autorisés pour le type de carte correspondant et associés logiquement entre eux ;
- l'on demande au client par l'intermédiaire du module d'entrée/sortie d'informations d'entrer les données nécessaires en fonction de la carte d'appel utilisée pour s'identifier au service de cartes d'appel ;
- après une identification réussie, l'on demande au client, par l'intermédiaire du module d'entrée/sortie d'informations, son souhait de service ainsi que les autres terminaux de communication à sa disposition ;
- l'on vérifie à l'aide du PAN de la carte d'appel si le service souhaité par le client est autorisé pour la carte d'appel qu'il utilise ;
- lorsque le service souhaité par le client est autorisé, des services appropriés et/ou des combinaisons de service sont déterminés en association avec des supports d'entrée et de sortie d'informations appropriés par l'intermédiaire d'une seconde base de données pour réaliser le souhait de service, la seconde base de données contenant des données sur les services et/ou les combinaisons de services associés de façon logique à une matrice de conversion contenant les supports d'entrée et de sortie d'informations connus et toutes les combinaisons de supports d'entrée et de sortie pouvant découler des supports d'entrée et de sortie d'informations connus, y compris des configurations du terminal/des terminaux pour les services et/ou des combinaisons de service ;
- les services et/ou combinaisons de service déterminés en fonction du souhait de service du client sont soumis à un test de vraisemblance en association avec les supports d'entrée et de sortie d'informations déterminés à cet effet, pour savoir si le service souhaité et/ou la combinaison de services souhaitée est approprié pour réaliser le souhait de service du client en association avec les supports d'entrée et de sortie déterminés en tenant compte de la configuration du terminal/des terminaux disponible/s au côté du client et si le service souhaité et/ou la combinaison de services souhaitée est autorisé dans le cadre du système des cartes d'appel ;
- a) si le résultat du test de vraisemblance est négatif, une réponse est envoyée au module d'entrée/sortie d'informations à partir duquel une information mémorisée sur le problème survenu est presentée au client et l'on demande au client de corriger les données correspondant à son souhait de service ; et
- b) si le résultat du test de vraissemblance est positif, le service et/ou la combinaison de services nécessaires à la réalisation du souhait de service est généré et automatiquement connecté au client, toutes les composantes de service nécessaires pour répondre au souhait de service étant proposées les unes après les autres par le système des cartes d'appel sur la base du souhait de service.

2. Procédé selon la revendication 1, **caractérisé en ce que** le dialogue du client avec le système des cartes d'appel est réalisé sous la forme d'un dialogue homme/machine par l'intermédiaire d'un module d'entrée/sortie d'informations prenant la forme d'un module de reconnaissance/sortie de la parole.

3. Procédé selon la revendication 1, **caractérisé en ce que** le dialogue du client avec le système des cartes d'appel se fait en échangeant des caractères de commande alphanumériques.

4. Procédé selon l'une des revendications 1 à 3, **caractérisé en ce que** le client est automatiquement mis en relation avec un opérateur en cas de problème pendant le dialogue homme/machine, ledit opérateur voyant en même temps toutes les données pertinentes du client sur son écran de surveillance.

5. Procédé selon la revendication 1, **caractérisé en ce qu'**après détermination des services et/ou de la combinaison de services appropriés pour réaliser le service souhaité, l'on demande au client d'entrer les possibilités de sortie à sa disposition par l'intermédiaire du module d'entrée/sortie d'informations.
